# EUROPEAN PATENT SPECIFICATION

(11) **EP 2 779 709 B1**
(45) Date of publication and mention of the grant of the patent: **05.02.2020**
(21) Application number: 13198163.1
(22) Date of filing: 18.12.2013
(51) Int. Cl.: H04W 4/02, H04W 4/21, H04L 29/08, H04W 4/60, H04W 4/80

(54) **Application connection for devices in a network**
Anwendungsverbindung für Vorrichtungen in einem Netzwerk
Connexion d'application pour des dispositifs dans un réseau

(30) Priority: 14.03.2013 US 201313803723; 24.06.2013 KR 20130072616
(43) Date of publication of application: 17.09.2014
(60) Divisional application: 20150129.3
(73) Proprietor: Samsung Electronics Co., Ltd., Gyeonggi-do 443-742 (KR)
(72) Inventor: Singhal, Ashish, Irvine, CA 92606 (US); Lee, Shiangfeng, Irvine, CA 92603 (US); Rowe, Jason, Irvine, CA 92606 (US); Kashyap, Praveen, Irvine, CA 92606 (US)
(74) Representative: Appleyard Lees IP LLP

(56) References cited:
- WO-A1-2012/135563
- US-A1- 2004 225 716
- US-A1- 2007 160 004
- US-A1- 2009 210 802
- US-A1- 2009 216 846
- US-A1- 2012 066 373
- US-A1- 2012 268 553

## Description

### TECHNICAL FIELD

One or more embodiments relate generally to applications in a network environment and, in particular, to application connection by devices in a network.

### BACKGROUND

Wireless networks use passwords to prevent access to devices and content within the network for security. In order for guests to access a secure wireless network with their devices, the guest devices are required to pair to the wireless network for discovery. In order for pairing to occur, the password for the wireless network has to be given to the guests, which poses a security risk as well as an inconvenience.

WO 2012/135563 A1 discloses a system and method for establishing a communication session.

### SUMMARY

The invention is set out in the appended set of claims; the further examples called embodiments in the description are illustrative examples, not embodiments claimed in the present application.

### BRIEF DESCRIPTION OF THE DRAWINGS

For a fuller understanding of the nature and advantages of the embodiments, as well as a preferred mode of use, reference should be made to the following detailed description read in conjunction with the accompanying drawings, in which:
FIG. 1 shows a schematic view of a communications system, according to an embodiment.
FIG. 2 shows a block diagram of an architecture system for application connection, according to an embodiment.
FIG. 3 shows an example flow chart for application connection, according to an embodiment.
FIG. 4 shows another example flow chart for application connection, according to an embodiment.
FIG. 5 shows an example flow chart for application connection, according to an embodiment.
FIG. 6 shows another example flow chart for application connection, according to an embodiment.
FIG. 7 shows another example flow chart for application connection, according to an embodiment.
FIG. 8 shows an example scenario for application connection, according to an embodiment.
FIG. 9 shows another example scenario for application connection, according to an embodiment.
FIG. 10 shows another example scenario for application connection, according to an embodiment.
FIG. 11 shows another example scenario for application connection, according to an embodiment.
FIG. 12 shows another example scenario for application connection, according to an embodiment.
FIG. 13 shows another example scenario for application connection, according to an embodiment.
FIG. 14 shows another example scenario for application connection, according to an embodiment.
FIG. 15 is a high-level block diagram showing an information processing system comprising a computing system implementing an embodiment.

### DETAILED DESCRIPTION

The following description is made for the purpose of illustrating the general principles of the embodiments and is not meant to limit the inventive concepts claimed herein. Further, particular features described herein can be used in combination with other described features in each of the various possible combinations and permutations. Unless otherwise specifically defined herein, all terms are to be given their broadest possible interpretation including meanings implied from the specification as well as meanings understood by those skilled in the art and/or as defined in dictionaries, treatises, etc.

One or more embodiments of relate generally to application sharing. In one embodiment provides connection to an application launched within a local network by electronic devices.

In one embodiment, the electronic devices comprise one or more mobile electronic devices capable of data communication over a communication link such as a wireless communication link. Examples of such mobile device include a mobile phone device, a mobile tablet device, etc. In one embodiment, a method provides for application connection for electronic devices. One embodiment comprises receiving a list of application active sessions by a first electronic device based on location of the active sessions in relation to a location of the first electronic device. In one embodiment, an active session is selected using the first electronic device to gain access for connection to a first application by the first electronic device.

Another embodiment provides a method for application connection for electronic devices that comprises receiving session information by a first device. In one embodiment, the first device includes a first application launched thereon. In one embodiment, an invitation message including the session information is provided to a second electronic device. In one embodiment, the session information is used by the second electronic device to connect to the first application.

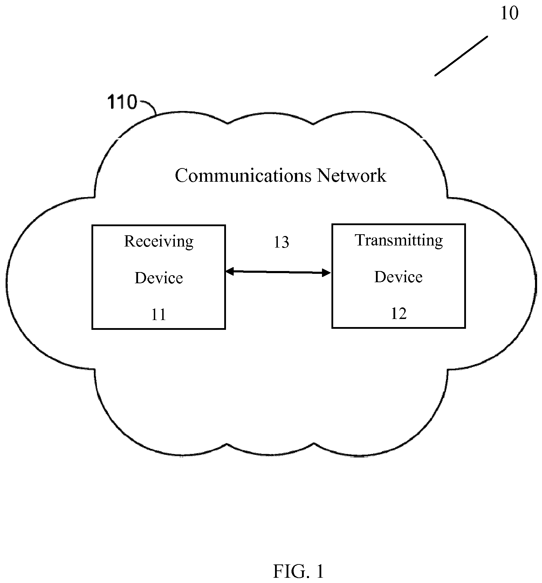

FIG. 1 is a schematic view of a communications system in accordance with one embodiment. Communications system 10 may include a communications device that initiates an outgoing communications operation (transmitting device 12) and communications network 110, which transmitting device 12 may use to initiate and conduct communications operations with other communications devices within communications network 110. For example, communications system 10 may include a communication device that receives the communications operation from the transmitting device 12 (receiving device 11). Although communications system 10 may include several transmitting devices 12 and receiving devices 11, only one of each is shown in FIG. 1 to simplify the drawing.

Any suitable circuitry, device, system or combination of these (e.g., a wireless communications infrastructure including communications towers and telecommunications servers) operative to create a communications network may be used to create communications network 110. Communications network 110 may be capable of providing communications using any suitable communications protocol. In some embodiments, communications network 110 may support, for example, traditional telephone lines, cable television, Wi-Fi (e.g., a 802.11 protocol), Bluetooth®, high frequency systems (e.g., 900 MHz, 2.4 GHz, and 5.6 GHz communication systems), infrared, other relatively localized wireless communication protocol, or any combination thereof. In some embodiments, communications network 110 may support protocols used by wireless and cellular phones and personal email devices (e.g., a Blackberry®). Such protocols can include, for example, GSM, GSM plus EDGE, CDMA, quadband, and other cellular protocols. In another example, a long range communications protocol can include Wi-Fi and protocols for placing or receiving calls using VOIP or LAN. Transmitting device 12 and receiving device 11, when located within communications network 110, may communicate over a bidirectional communication path such as path 13. Both transmitting device 12 and receiving device 11 may be capable of initiating a communications operation and receiving an initiated communications operation.

Transmitting device 12 and receiving device 11 may include any suitable device for sending and receiving communications operations. For example, transmitting device 12 and receiving device 11 may include a media player, a cellular telephone or a landline telephone, a personal e-mail or messaging device with audio and/or video capabilities, pocket-sized personal computers such as an iPAQ Pocket PC available by Hewlett Packard Inc., of Palo Alto, Calif., personal digital assistants (PDAs), a desktop computer, a laptop computer, and any other device capable of communicating wirelessly (with or without the aid of a wireless enabling accessory system) or via wired pathways (e.g., using traditional telephone wires). The communications operations may include any suitable form of communications, including for example, voice communications (e.g., telephone calls), data communications (e.g., e-mails, text messages, media messages), or combinations of these (e.g., video conferences).

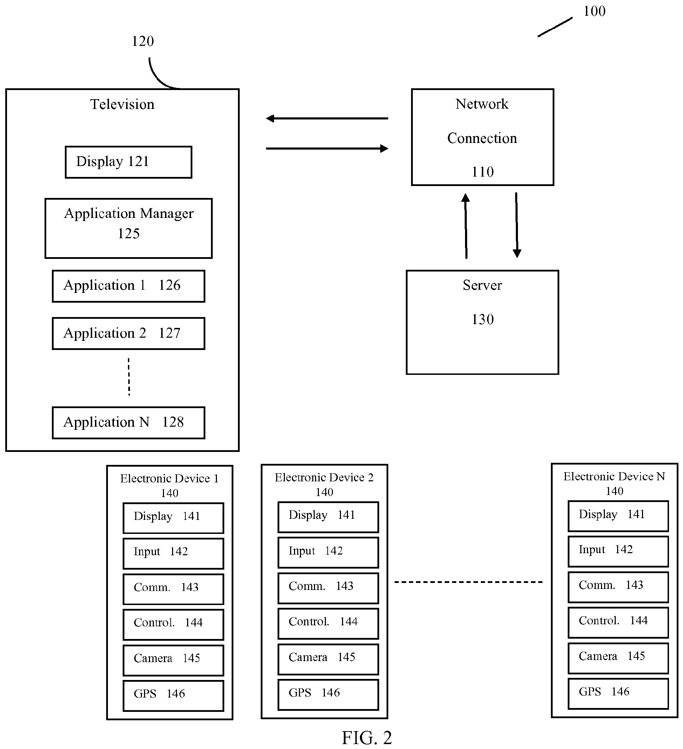

FIG. 2 shows a functional block diagram of an embodiment of an architecture system 100 for application connection by electronic devices 1-N 140 (N being a positive integer), according to an embodiment. In one embodiment, the system 100 comprises a discovery a television device 120, a cloud or server device 130 and network connection device 110. In one embodiment, the television device comprises a display 121, and an application manager module 125 for managing applications, such as application 1 126, application 2 127 up to application N 128, N being a positive integer.

In one embodiment, the display 121 may be a separate device from the television device 120 or integrated with the television device 120. In one embodiment, the network connection device 110 may comprise a network interface, such as a network modem, router, etc. for handling communications between the television device and the server device 130 and for forming a local network that the television device 120 may be connected with.

In one embodiment, both transmitting device 12 and receiving device 11 may include some or all of the features of electronics devices 1-N 140. In one embodiment, the electronic devices 1-N 140 may comprise a display 141, input mechanism 142, communications circuitry 143, control circuitry 144, a camera 145, and a global positioning system (GPS) receiver module 146, a microphone, audio output, and any other suitable components.

In one embodiment, all of the applications employed by display 141, input mechanism 142, the audio output and communications circuitry 143 may be interconnected and managed by control circuitry 144. In one example, a hand held music player capable of transmitting music to other tuning devices may be incorporated into the electronics devices 1-N 140.

In one embodiment, the audio output may include any suitable audio component for providing audio to a user of any of the electronics devices 1-N 140. For example, the audio output may include one or more speakers (e.g., mono or stereo speakers) built into an electronics device 1-N 140. In some embodiments, the audio output may include an audio component that is remotely coupled to an electronics device 1-N 140. For example, the audio output may include a headset, headphones or earbuds that may be coupled to communications device with a wire (e.g., coupled to an electronics device 1-N 150 with a jack) or wirelessly (e.g., Bluetooth® headphones or a Bluetooth® headset).

In one embodiment, display 141 may include any suitable screen or projection system for providing a display visible to the user. For example, display 141 may include a screen (e.g., an LCD screen) that is incorporated in an electronics device 1-N 140. As another example, display 141 may include a movable display or a projecting system for providing a display of content on a surface remote from an electronics device 1-N 140 (e.g., a video projector). Display 141 may be operative to display content (e.g., information regarding communications operations or information regarding available media selections) under the direction of control circuitry 144.

In one embodiment, input mechanism 142 may be any suitable mechanism or user interface for providing user inputs or instructions to an electronics device 1-N 140. Input mechanism 142 may take a variety of forms, such as a button, keypad, dial, a click wheel, or a touch screen. The input mechanism 142 may include a multi-touch screen. The input mechanism may include a user interface that may emulate a rotary phone or a multi-button keypad, which may be implemented on a touch screen or the combination of a click wheel or other user input device and a screen.

In one embodiment, communications circuitry 143 may be any suitable communications circuitry operative to connect to a communications network (e.g., communications network 110, FIG. 1) and to transmit communications operations and media from an electronics device 1-N 140 to other devices within the communications network. Communications circuitry 143 may be operative to interface with the communications network using any suitable communications protocol such as, for example, Wi-Fi (e.g., a 802.11 protocol), Bluetooth®, high frequency systems (e.g., 900 MHz, 2.4 GHz, and 5.6 GHz communication systems), infrared, GSM, GSM plus EDGE, CDMA, quadband, and other cellular protocols, VOIP, or any other suitable protocol.

In some embodiments, communications circuitry 143 may be operative to create a communications network using any suitable communications protocol. For example, communications circuitry 143 may create a short-range communications network using a short-range communications protocol to connect to other communications devices. For example, communications circuitry 143 may be operative to create a local communications network using the Bluetooth® protocol to couple an electronics device 1-N 140 with a Bluetooth® headset.

In one embodiment, control circuitry 144 may be operative to control the operations and performance of an electronics device 1-N 140. Control circuitry 144 may include, for example, a processor, a bus (e.g., for sending instructions to the other components of an electronics device 1-N 140), memory, storage, or any other suitable component for controlling the operations of an electronics device 1-N 140. In some embodiments, a processor may drive the display and process inputs received from the user interface. The memory and storage may include, for example, cache, Flash memory, ROM, and/or RAM. In some embodiments, memory may be specifically dedicated to storing firmware (e.g., for device applications such as an operating system, user interface functions, and processor functions). In some embodiments, memory may be operative to store information related to other devices with which an electronics device 1-N 140 performs communications operations (e.g., saving contact information related to communications operations or storing information related to different media types and media items selected by the user).

In one embodiment, the control circuitry 144 may be operative to perform the operations of one or more applications implemented on an electronics device 1-N 140. Any suitable number or type of applications may be implemented. Although the following discussion will enumerate different applications, it will be understood that some or all of the applications may be combined into one or more applications. For example, an electronics device 1-N 140 may include an application connection application, a dialog application, a map application, a media application (e.g., QuickTime, MobileMusic.app, or MobileVideo.app). In some embodiments, an electronics device 1-N 140 may include one or several applications operative to perform communications operations. For example, an electronics device 1-N 140 may include a messaging application, a mail application, a telephone application, a voicemail application, an instant messaging application (e.g., for chatting), a videoconferencing application, a fax application, or any other suitable application for performing any suitable communications operation.

In some embodiments, an electronics device 1-N 140 may include a microphone. For example, an electronics device 1-N 140 may include a microphone to allow the user to transmit audio (e.g., voice audio) during a communications operation or as a means of establishing a communications operation or as an alternate to using a physical user interface. A microphone may be incorporated in an electronics device 1-N 140, or may be remotely coupled to an electronics device 1-N 140. For example, a microphone may be incorporated in wired headphones, or a microphone may be incorporated in a wireless headset.

In one embodiment, an electronics device 1-N 140 may include any other component suitable for performing a communications operation. For example, an electronics device 1-N 140 may include a power supply, ports or interfaces for coupling to a host device, a secondary input mechanism (e.g., an ON/OFF switch), or any other suitable component.

In one embodiment, a user may direct an electronics device 1-N 140 to perform a communications operation using any suitable approach. As one example, a user may receive a communications request from another device (e.g., an incoming telephone call, an email or text message, an instant message), and may initiate a communications operation by accepting the communications request. As another example, the user may initiate a communications operation by identifying another communications device and transmitting a request to initiate a communications operation (e.g., dialing a telephone number, sending an email, typing a text message, or selecting a chat screen name and sending a chat request).

In one embodiment, an electronic device 1-N 140 (N being a positive integer) may comprise a mobile device that may utilize mobile device hardware functionality including: the GPS receiver module146, the camera 145, a compass module, and an accelerometer and gyroscope module. The GPS receiver module 146 may be used to identify a current location of the mobile device (i.e., user). The compass module is used to identify direction of the mobile device. The accelerometer and gyroscope module is used to identify tilt of the mobile device.

The system 100 provides the electronic devices 1-N 140 (N being a positive integer)the ability to connect to an application launched on the television device 120, such as application 1 126, application 2 127 to application N 128. In one embodiment, the application 1 126, application 2 127 to application N 128 may comprise software applications executing on the television device 120, or executing on another device and having a visual display portion of the application shown on the display 121.

In one embodiment, the local network (e.g., a wireless network) that the television device 120 is connected to is a secured network with a security code (e.g., pass code, password, key code, etc.) providing access to the local network such that without having knowledge of the key code, the electronic devices 1-N 140 cannot pair or join the local network. In one embodiment, access is provided to the electronic devices 1-N 140 to the local network that the application is launched by means for connecting, such as by obtaining information from a server based on location of an electronic device (e.g., electronic devices 1-N 140), obtaining information from a communication (e.g., text message, email, chat, etc.), etc. In one embodiment, once an electronic device 1-N 140 is connected to the local network, the connection has a limited life for security purposes (e.g., one hour, two hours, 4 hours, etc.). In one embodiment, the security code is unique for each session.

In one embodiment, the timestamp and time to live value retrieved (e.g., from the cloud or server 130) are used by an application on an electronic device 1-N 140 to determine when to disconnect from the network. In this embodiment, the network information is time bound and the usage of the obtained information is restricted after the timestamp has expired.

In one embodiment, after an electronic device 1-N 140 connects to an application (e.g., application 1 126) on the television device 120, the electronic device 1-N 140 is disconnected from the network if it moves out of the wireless range of the network. In one embodiment, the connection information would have to be obtained again by the electronic device 1-N 140 in order to re-establish the connection. In one embodiment, the connection information may be obtained from any other electronic device 1-N 140 that may have the connection information.

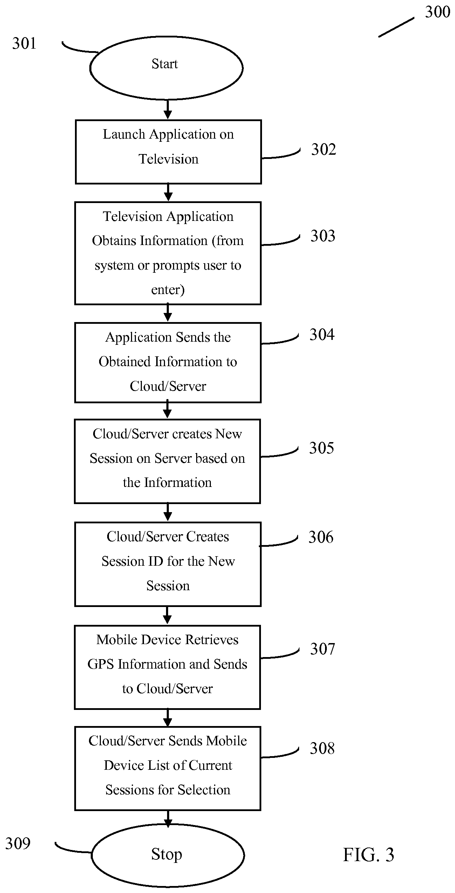

FIG. 3 shows an example flow chart process 300 for application connection in a network, according to an embodiment. In one embodiment, the process 300 starts with block 301. In one embodiment, in block 302 an application (e.g., Application 1 126, Application 2 127 to Application N 128) is launched on a television device, such as television device 120 (FIG. 1). In one embodiment, in block 303 the television application obtains information from the local network and/or from the user (e.g., via prompting for information entry). In one embodiment, the information may comprise a wireless network service set identification (SSID), network key (e.g., a number (e.g., 12345), an alphanumeric code (e.g., ABC123), etc.), a television device's Internet protocol (IP) address, session date and time, a timestamp, and time to live, session name, host's name, host's physical address, etc. In one embodiment, a java script object notation (JSON) string is formed from the compiled information obtained in block 303 (e.g., {"SSID": "Samsung," "NKEY": "12345," "TVIP": "1.2.3.4," "Timestamp": "12345," "TTL,": "12"}). In one embodiment, the JSON string is encrypted (e.g., by known encryption techniques).

Process 300 continues with block 304 where the obtained information is sent to a cloud or server (e.g., cloud or server 130). In one embodiment, in block 305, the cloud or server creates a new session based on the received information. In block 306, the server creates a session ID for the new session. In one embodiment, in block 307, a mobile device (e.g., electronic device 1-N 140, FIG. 1) retrieves GPS information (e.g., GPS coordinates) from its GPS receiver module (e.g., GPS receiver module 146) and sends this information to the cloud/server. In one embodiment, in block 308, the cloud/server sends the mobile device a list of current sessions in the local area of the mobile device based on the received GPS information. A user may then select a session to join based on the received list that is displayed on the mobile device (e.g., display 141). In block 309 the process 300 stops.

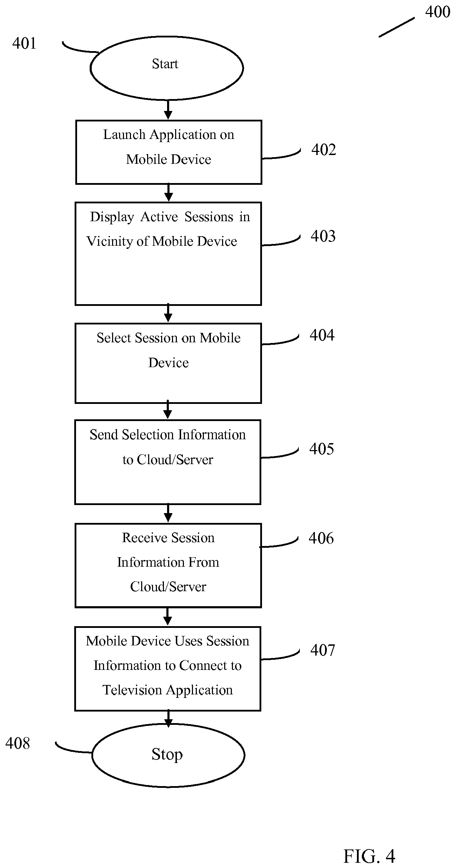

FIG. 4 shows an example flow chart process 400 for application connection in a network, according to an embodiment. In one embodiment, the process 400 starts with block 401. In one embodiment, in block 402, a mobile device application is launched on a mobile device, such as an electronic device 1-N 140 (FIG. 2). In block 403, active local television application sessions that are received from the cloud/server are displayed on the mobile device. In one embodiment, in block 404, a particular session is selected for accessing a television application in a local network. In block 405, the selected session information is sent to the cloud/server. In block 406, the cloud/server sends back local network information to the mobile device based on the selected session (e.g., Wi-Fi SSID, session ID, IP address of the television device, network key, etc.). In one embodiment, in block 407, the mobile device uses the information received to connect to the television application of the selected session. In block 408, the process 400 stops.

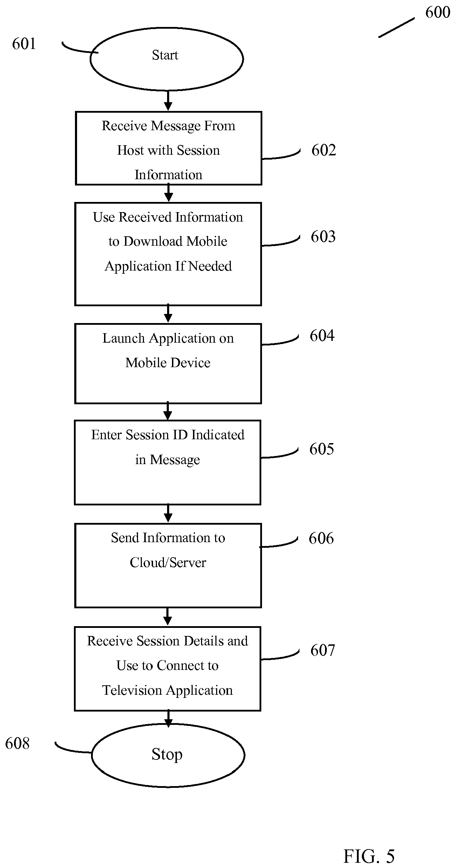

FIG. 5 shows an example flow chart process 600 for application connection in a network, according to an embodiment. In one embodiment, the process 600 starts with block 601. In one embodiment, in block 602, a mobile device, such as an electronic device 1-N 140 (FIG. 2), receives a message (e.g., email, text message, etc.) from a host that includes a television application session information (e.g., session ID). In block 603, the mobile device downloads a mobile device application if the application is not currently loaded on the mobile device, where the mobile device application assists with connecting to a television application. In one embodiment, the received message includes a link for downloading the mobile device application. In block 604, the mobile device launches the application. In one embodiment, in block 605, the user enters the session ID as requested/prompted by the application on the mobile device. In one embodiment, in block 606, the mobile device application sends the session ID information to the cloud/server. In block 607, the cloud/server sends the mobile device session details for allowing the mobile device to connect to the television application session on the local network. In block 608, the process 600 stops.

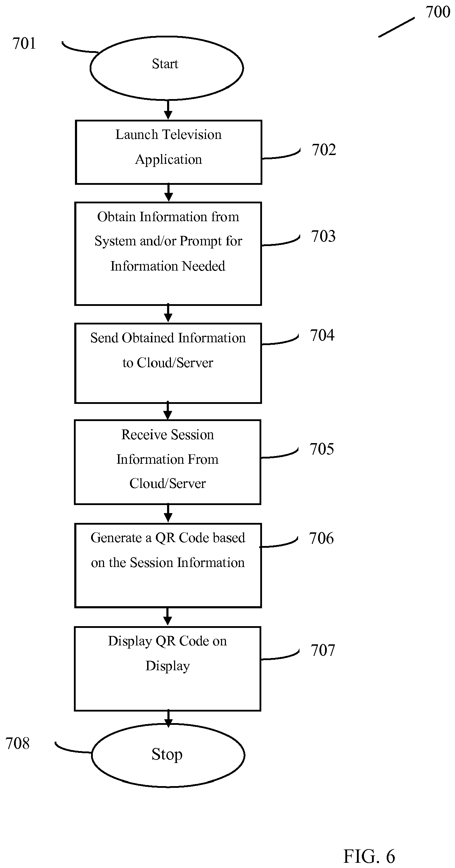

FIG. 6 shows an example flow chart process 700 for application connection in a network, according to an embodiment. In one embodiment, the process 700 starts with block 701. In one embodiment, in block 702 an application (e.g., Application 1 126, Application 2 127 to Application N 128) is launched on a television device, such as television device 120 (FIG. 1). In one embodiment, in block 703, the television application obtains information from the local network and/or from the user (e.g., via prompting for information entry). In one embodiment, the information may comprise a wireless network service set identification (SSID), network key (e.g., a number (e.g., 12345), an alphanumeric code (e.g., ABC123), etc.), a television device's Internet protocol (IP) address, session date and time, a timestamp, and time to live, session name, host's name, host's physical address, etc. In one embodiment, a java script object notation (JSON) string is formed from the compiled information obtained in block 303 (e.g., {"SSID": "Samsung," "NKEY": "12345," "TVIP": "1.2.3.4," "Timestamp": "12345," "TTL,": "12"}). In one embodiment, the JSON string is encrypted (e.g., by known encryption techniques).

In one embodiment, in block 704, the obtained information is sent to the cloud/server (e.g., cloud or server 130). In one embodiment, the cloud or server creates a new session based on the received information and creates a session ID. Process 700 continues to block 705, where the television application receives the session information from the cloud/server. In one embodiment, in block 706, a quick response (QR) code is generated based on the session information received from the cloud/server. In block 707, the QR code is displayed on a display (e.g., display 121). In block 708, the process 700 stops.

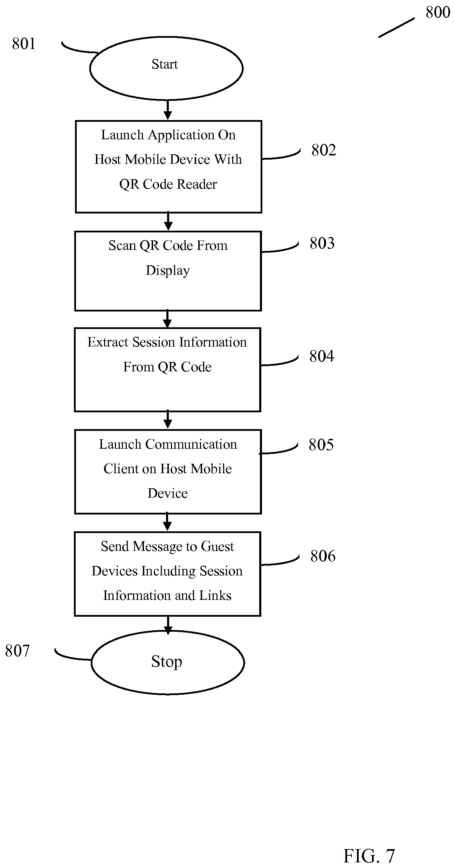

FIG. 7 shows an example flow chart process 800 for application connection in a network, according to an embodiment. In one embodiment, the process 800 starts with block 801. In one embodiment, in block 802, a mobile device application is launched on a host's mobile device (e.g., electronic device 2 140) that includes a QR code reader (e.g., an application that uses a camera 145 (FIG. 1) for scanning). In one embodiment, in block 803, a QR code that is displayed by a television application on a display (e.g., display 141, FIG. 1) is scanned in by the host's mobile device. In one embodiment, in block 804, session information is extracted from the scanned QR code by the host's mobile device. In one embodiment, in block 805, a communication client (e.g., email client, text messaging client, etc.) is launched on the host's mobile device. In block 806, a message is sent to a guest using the communication client, where the message includes information (e.g., SSID (e.g., "Samsung"), link to application download site, etc.). In block 807, process 800 stops.

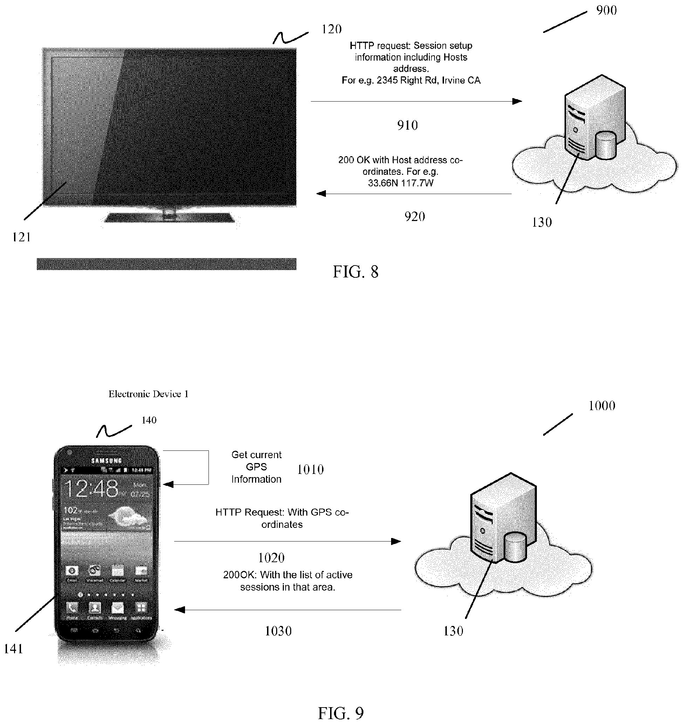

FIG. 8 shows an example scenario 900 for application connection in a network of the television device 120, according to an embodiment. In one embodiment, the television device 120 prompts the user on the display 121 to enter setup information that is related to the network session, such as session name, host's name and host's home address (e.g., 2345 Right Rd., Irvine, CA), for example using a remote control device, from a paired electronic device, etc. In one embodiment, the television device 120 connects to a cloud or server 130 and sends a request 910 (e.g., HTTP request) and uploads the home address information to the cloud or server 130. In one embodiment, the server responds via a reply 920 with the hosts GPS location based on reverse lookup of the address (e.g., 33.66N 117.7W).

In one embodiment, the application (e.g., application 1 126) running on the television device 120 retrieves information from the local network, such as wireless SSID, security key and IP address of the television device 120. In one embodiment, if the television device 120 is wire connected to the local network (e.g., via Ethernet) and does not have the required network information, the application prompts the user to enter the network information.

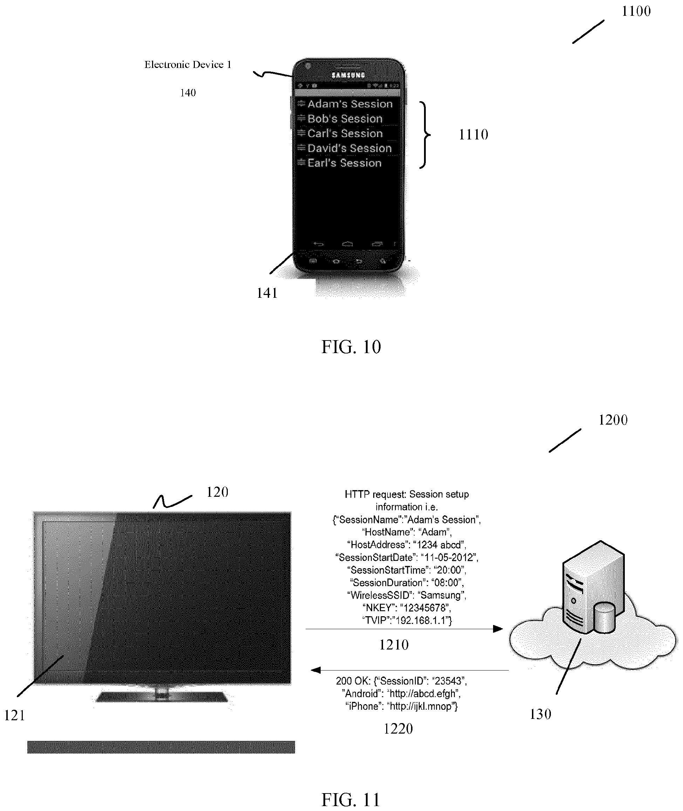

FIG. 9 shows an example scenario 1000 for application connection in a network of the television device 120, according to an embodiment. In one embodiment, an application of a guest's electronic device 1 140 retrieve's the GPS location 1010 of the electronic device 1 140 and sends the GPS location 1010 to the cloud or server 130 using a request 1020, and the cloud or server 130 responds with a reply 1030 that includes a list 1110 (FIG. 10) of active sessions in the area of the GPS location 1010.

FIG. 10 shows an example scenario 1100 for application connection in a network of the television device 120, according to an embodiment. In one embodiment, the list 1110 of active sessions is displayed on display 141 of the guest's electronic device 1 140. The user then selects one option out of the list 1110 displayed on the display 141. In one embodiment, the electronic device 1 140 downloads the information related to the selected session from the cloud or server 130. The application of the electronic device 1 140 uses the downloaded information to connect to the local wireless network. Once connected, the electronic device 1 140 may use the television device 120 IP address to communicate with the application running on the television device 120.

In one embodiment, the timestamp and time to live value retrieved from the cloud or server 130 are used by the application on the electronic device 1 140 to determine when to disconnect from the local network network. After an electronic device 1 140 moves out of the wireless range of the local network, the electronic device 1 140 disconnects from the local network and the session information may have to be obtained again in order to re-establish the connection.

FIG. 11 shows an example scenario 1200 for application connection in a network of the television device 120, according to an embodiment. In one embodiment, the host television device 120 connects to a cloud or server 130 and sends a request 1210 (e.g., HTTP request) and uploads session setup information from the local network to the cloud or server 130, for example: "SessionName": "Adam's Session," "HostName:" "Adam;" "HostAddress:" "1234 ABCD;" "SessionStartDate:" "11-05-2012;" "SessionTime:" "20:00;" "SessionDuration:" "08:00;" "WirelessSSID:" "Samsung;" "NKEY:" "12345678;" "TVIP:" "192.168.1.1," etc. In one embodiment, the cloud or server 130 generates a unique session ID based on the received information from the host television device 120. In one embodiment, the cloud or server 130 determines where the mobile device application on different platforms may be found (e.g., URL for the application on an Android® market, etc.). In one embodiment, session ID and the location information for the mobile device application is also sent back to the host television device 120 in a reply message 1220.

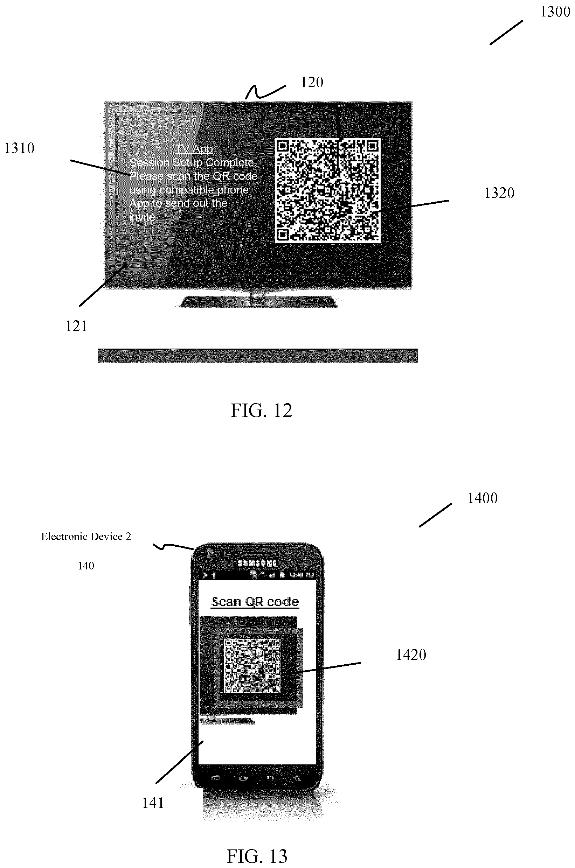

FIG. 12 shows an example scenario 1300 for application connection in a network of the television device 120, according to an embodiment. In one embodiment, once the host television device 120 receives the session ID and location information for a mobile device application for connecting to the television device application (e.g., application 1 126, FIG. 2), the host television device 120 generates a QR code 1320 on the display 121, and informs the host of the status 1310. In one embodiment, the television application also presents instructions for using the QR code, such as "Please scan the QR code using compatible phone App to send out the invite."

FIG. 13 shows an example scenario 1400 for application connection in a network of the television device 120, according to an embodiment. In one embodiment, a host mobile electronic device (e.g., electronic device 2 140, FIG. 2) is used to scan the QR code from the host television device (e.g., television device 120, FIG. 2). In one embodiment, the scanned QR code 1420 is shown on the display (e.g., 141, FIG. 2) of the mobile device. In one embodiment, the scanning of the QR code by a mobile device application automatically launches a Host Phone's email client with the Session ID and other information in it. In one embodiment, the email would also include URL's from where the mobile device application may be downloaded. The host mobile device may then be used to compose the invite, add guests, and send out the invite to the selected guests.

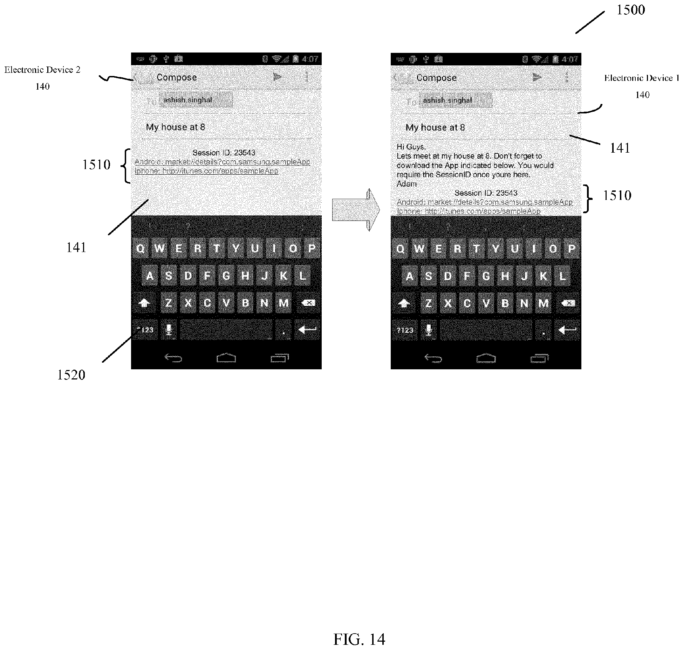

FIG. 14 shows an example scenario 1500 for application connection in a network of the television device 120, according to an embodiment. In one embodiment, after using the scenarios 1300 and 1400, a host's electronic device (e.g., electronic device 2 140) is used to compose and send an invite (e.g., composed using an electronic keyboard 1520) communication that includes a unique identifier 1510 to a guest's electronic device 1 140. In one embodiment, using the unique identifier 1510 sent in the invite shown on display 141, the guest's electronic device 1 140 application retrieves the session information from the cloud or server 130 using the unique identifier 1510. The electronic device 1 140 application uses the session information to connect to the local network. In one embodiment, once connected, the electronic device 1 140 uses the IP address of television device 120 to communicate with the application of the television device 120. In one embodiment, along with the session ID, a link (e.g., URL) of a location of where a mobile device application may be downloaded or otherwise obtained from. If the user of the electronic device 1 140 does not already have the mobile device application, the link may be used for downloading and launching the mobile device application on the electronic device 1 140. Once the mobile device application is downloaded, the guests start the mobile device application and enter the session ID they received in the invite. The guests would then be able to access the session on the server.

In one embodiment, once the guests are at the host's location (e.g., house) and they start the mobile device application, the mobile device application checks if the current time matches the Session Active time. If it does, the mobile device application automatically downloads the hosts' SSID, Network Key and IP address information. This would allow the host television application to connect to the Host's wireless local network. Once the host television application is connected, the guest's mobile electronic devices may use the IP address of television device 120 to communicate with the television application.

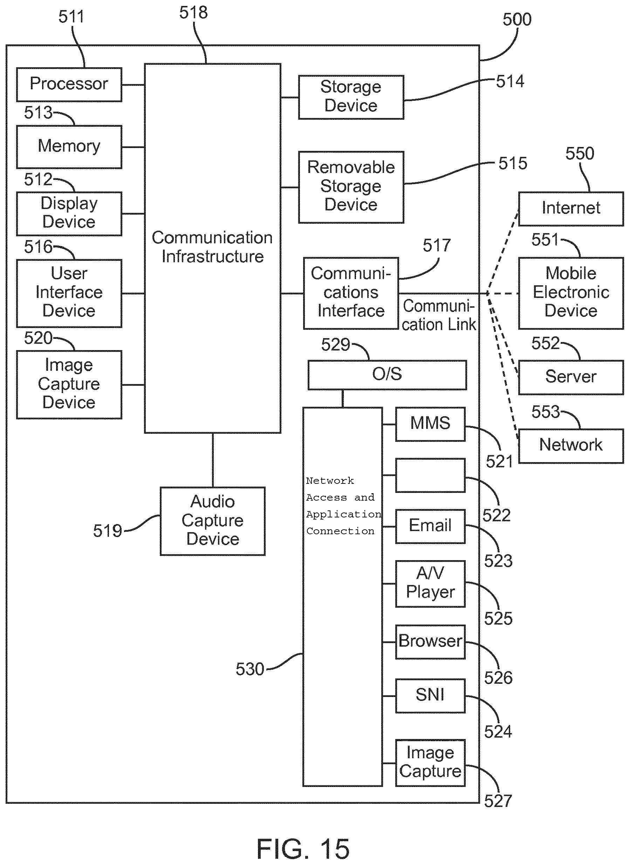

FIG. 15 is a high-level block diagram showing an information processing system comprising a computing system 500 implementing an embodiment. The system 500 includes one or more processors 511 (e.g., ASIC, CPU, etc.), and can further include an electronic display device 512 (for displaying graphics, text, and other data), a main memory 513 (e.g., random access memory (RAM)), storage device 514 (e.g., hard disk drive), removable storage device 515 (e.g., removable storage drive, removable memory module, a magnetic tape drive, optical disk drive, computer-readable medium having stored therein computer software and/or data), user interface device 516 (e.g., keyboard, touch screen, keypad, pointing device), and a communication interface 517 (e.g., modem, wireless transceiver (such as WiFi, Cellular), a network interface (such as an Ethernet card), a communications port, or a PCMCIA slot and card). The communication interface 517 allows software and data to be transferred between the computer system and external devices. The system 500 further includes a communications infrastructure 518 (e.g., a communications bus, cross-over bar, or network) to which the aforementioned devices/modules 511 through 517 are connected.

The information transferred via communications interface 517 may be in the form of signals such as electronic, electromagnetic, optical, or other signals capable of being received by communications interface 517, via a communication link that carries signals and may be implemented using wire or cable, fiber optics, a phone line, a cellular phone link, an radio frequency (RF) link, and/or other communication channels.

In one implementation, in a mobile wireless device such as a mobile phone, the system 500 further includes an image capture device such as a camera 15. The system 500 may further include application modules as MMS module 521, SMS module 522, email module 523, social network interface (SNI) module 524, audio/video (AV) player 525, web browser 526, image capture module 527, etc.

The system 500 further includes a discovery module 11 as described herein, according to an embodiment. In one implementation of network access and application connection processes 530 along with an operating system 529 may be implemented as executable code residing in a memory of the system 500. In another embodiment, such modules are in firmware, etc.

One or more of the described embodiments may provide a convenient way for many guest's of a host that may desire access to a television device application on a wireless network in order to connect their handheld devices application with the television device application. In using n or more of the described embodiments, no need is required for network based discovery employing, for example, universal plug and play (UPnP) protocol as the IP address of a television device may be distributed as part of a QR code.

As is known to those skilled in the art, the aforementioned example architectures described above, according to said architectures, can be implemented in many ways, such as program instructions for execution by a processor, as software modules, microcode, as computer program product on computer readable media, as analog/logic circuits, as application specific integrated circuits, as firmware, as consumer electronic devices, AV devices, wireless/wired transmitters, wireless/wired receivers, networks, multi-media devices, etc. Further, embodiments of said Architecture can take the form of an entirely hardware embodiment, an entirely software embodiment or an embodiment containing both hardware and software elements.

Embodiments have been described with reference to flowchart illustrations and/or block diagrams of methods, apparatus (systems) and computer program products according to one or more embodiments. Each block of such illustrations/diagrams, or combinations thereof, can be implemented by computer program instructions. The computer program instructions when provided to a processor produce a machine, such that the instructions, which execute via the processor, create means for implementing the functions/operations specified in the flowchart and/or block diagram. Each block in the flowchart/block diagrams may represent a hardware and/or software module or logic, implementing one or more embodiments. In alternative implementations, the functions noted in the blocks may occur out of the order noted in the figures, concurrently, etc.

The terms "computer program medium," "computer usable medium," "computer readable medium", and "computer program product," are used to generally refer to media such as main memory, secondary memory, removable storage drive, a hard disk installed in hard disk drive. These computer program products are means for providing software to the computer system. The computer readable medium allows the computer system to read data, instructions, messages or message packets, and other computer readable information from the computer readable medium. The computer readable medium, for example, may include non-volatile memory, such as a floppy disk, ROM, flash memory, disk drive memory, a CD-ROM, and other permanent storage. It is useful, for example, for transporting information, such as data and computer instructions, between computer systems. Computer program instructions may be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

Computer program instructions representing the block diagram and/or flowcharts herein may be loaded onto a computer, programmable data processing apparatus, or processing devices to cause a series of operations performed thereon to produce a computer implemented process. Computer programs (i.e., computer control logic) are stored in main memory and/or secondary memory. Computer programs may also be received via a communications interface. Such computer programs, when executed, enable the computer system to perform the features of one or more embodiments as discussed herein. In particular, the computer programs, when executed, enable the processor and/or multi-core processor to perform the features of the computer system. Such computer programs represent controllers of the computer system. A computer program product comprises a tangible storage medium readable by a computer system and storing instructions for execution by the computer system for performing a method of one or more embodiments.

## Claims

1. A method for application connection, comprising:
by a first electronic device, receiving session information by scanning an identification image of a first application displayed on a display device;
by the first electronic device, selecting a second electronic device for connecting to the first application of the display device, from among a plurality of electronic devices;
by the first electronic device, transmitting an invitation message including the received session information to the selected second electronic device; and
by a second electronic device, connecting to the first application of the display device based on the session information which is included in the transmitted invitation message.

2. The method of claim 1, wherein the invitation message includes one or more of a uniform resource identifier, URI, information, and a uniform resource locator, URL.

3. The method of claim 2, wherein the second electronic device connects to the first application of the display device based on the session information included in the transmitted invitation message.

4. The method of any preceding claim, wherein the identification image comprises a quick response, QR, code.

5. The method of any preceding claim, wherein the first electronic device is implemented as a host mobile device and the second electronic device is implemented as a guest mobile device.

6. The method of claim 5, wherein the host mobile device uses the session information to generate content for providing the invitation message to the guest mobile device.

7. The method of claim 5, wherein the host mobile device provides the invitation message to the guest mobile device through one of a text message and an email.

8. The method of claim 2, further comprising:
transmitting identification content and information related to the first electronic device to a server; and
automatically generating the invitation message including the session information for the second electronic device to gain access to the network.

9. The method of claim 8, further comprising:
launching a second application on the second electronic device;
using the session information for retrieving information related to the first electronic device from the server by the second electronic device; and
using the retrieved information by the second electronic device for connecting to the first application.

10. A system comprising:
a first electronic device (140) configured to receive session information by scanning identification image of a first application displayed on a display device (120), select a second electronic device for connecting to the first application of the display device, from among a plurality of electronic devices; and transmit an invitation message including the received session information to the selected second electronic device; and
a second electronic device (140) configured to connect to the first application of the display device based on the session information which is included in the transmitted invitation message.

11. The system of claim 10, wherein the invitation message includes one or more of a uniform resource identifier, URI, information, and a uniform resource locator, URL.

12. The system of claim 11, wherein the second electronic device connects to the application of the display device based on the session information included in the transmitted invitation message.

13. The system of any of claims 10 to 12, wherein the identification image comprises a quick response, QR, code.

14. The system of claim 11, wherein the first electronic device uses the session information to generate content for providing the invitation message to the second electronic device, and optionally, wherein the first electronic device provides the invitation message to the second electronic device through one of a text message and an email.

15. The system of any of claims 10 to 14, wherein the first electronic device is implemented as a host mobile device and the second electronic device is implemented as a guest mobile device.

## Patentansprüche

1. Verfahren zur Anwendungsverbindung, umfassend:
durch eine erste elektronische Vorrichtung, Empfangen von Sitzungsinformationen durch Abtasten eines Identifikationsbildes einer ersten Anwendung, die auf einer Anzeigevorrichtung angezeigt wird;
durch die erste elektronische Vorrichtung, Auswählen einer zweiten elektronischen Vorrichtung zum Verbinden mit der ersten Anwendung der Anzeigevorrichtung aus mehreren elektronischen Vorrichtungen;
durch die erste elektronische Vorrichtung, Übertragen einer Einladungsnachricht mit der empfangenen Sitzungsinformation an die ausgewählte zweite elektronische Vorrichtung; und
durch eine zweite elektronische Vorrichtung, Verbinden mit der ersten Anwendung der Anzeigevorrichtung basierend auf den Sitzungsinformationen, die in der übertragenen Einladungsnachricht enthalten sind.

2. Verfahren nach Anspruch 1, wobei die Einladungsnachricht eine oder mehrere URI-Informationen (URI = "Uniform Resource Identifier") und eine URL ("Uniform Resource Locator") enthält.

3. Verfahren nach Anspruch 2, wobei die zweite elektronische Vorrichtung basierend auf den in der übertragenen Einladungsnachricht enthaltenen Sitzungsinformationen eine Verbindung mit der ersten Anwendung der Anzeigevorrichtung herstellt.

4. Verfahren nach einem der vorhergehenden Ansprüche, wobei das Identifikationsbild einen QR-Code (QR = "Quick Response") umfasst.

5. Verfahren nach einem der vorhergehenden Ansprüche, wobei die erste elektronische Vorrichtung als mobile Host-Vorrichtung und die zweite elektronische Vorrichtung als mobile Gastvorrichtung implementiert ist.

6. Verfahren nach Anspruch 5, wobei die Host-Mobilvorrichtung die Sitzungsinformationen verwendet, um Inhalte zum Bereitstellen der Einladungsnachricht an die Gast-Mobilvorrichtung zu erzeugen.

7. Verfahren nach Anspruch 5, wobei die Host-Mobilvorrichtung die Einladungsnachricht an die Gast-Mobilvorrichtung durch eine Textnachricht oder eine E-Mail bereitstellt.

8. Verfahren nach Anspruch 2, ferner umfassend:
Übertragen von Identifikationsinhalten und Informationen im Zusammenhang mit der ersten elektronischen Vorrichtung an einen Server; und
automatisches Erzeugen der Einladungsnachricht mit den Sitzungsinformationen für die zweite elektronische Vorrichtung, um Zugang zu dem Netzwerk zu erhalten.

9. Verfahren nach Anspruch 8, ferner umfassend:
Starten einer zweiten Anwendung auf der zweiten elektronischen Vorrichtung;
Verwenden der Sitzungsinformationen zum Abrufen von Informationen im Zusammenhang mit der ersten elektronischen Vorrichtung von dem Server durch die zweite elektronische Vorrichtung; und
Verwenden der abgerufenen Informationen durch die zweite elektronische Vorrichtung zum Verbinden mit der ersten Anwendung.

10. System, umfassend:
eine erste elektronische Vorrichtung (140), die dazu ausgelegt ist, Sitzungsinformationen durch Abtasten des Identifikationsbildes einer ersten Anwendung zu empfangen, die auf einer Anzeigevorrichtung (120) angezeigt wird, eine zweite elektronische Vorrichtung zum Verbinden mit der ersten Anwendung der Anzeigevorrichtung aus mehreren elektronischen Vorrichtungen auszuwählen; und eine Einladungsnachricht mit den empfangenen Sitzungsinformationen an die ausgewählte zweite elektronische Vorrichtung zu senden; und
eine zweite elektronische Vorrichtung (140), die dazu ausgelegt ist, mit der ersten Anwendung der Anzeigevorrichtung basierend auf den Sitzungsinformationen, die in der übertragenen Einladungsnachricht enthalten sind, eine Verbindung herzustellen.

11. System nach Anspruch 10, wobei die Einladungsnachricht eine oder mehrere URI-Informationen (URI = "Uniform Resource Identifier") und eine URL ("Uniform Resource Locator") enthält.

12. System nach Anspruch 11, wobei die zweite elektronische Vorrichtung basierend auf den in der übertragenen Einladungsnachricht enthaltenen Sitzungsinformationen eine Verbindung mit der Anwendung der Anzeigevorrichtung herstellt.

13. System nach einem der Ansprüche 10 bis 12, wobei das Identifikationsbild einen QR-Code (QR = "Quick Response") umfasst.

14. System nach Anspruch 11, wobei die erste elektronische Vorrichtung die Sitzungsinformationen verwendet, um Inhalte zum Bereitstellen der Einladungsnachricht für die zweite elektronische Vorrichtung zu erzeugen, und optional, wobei die erste elektronische Vorrichtung die Einladungsnachricht an die zweite elektronische Vorrichtung durch eine Textnachricht und/oder eine E-Mail bereitstellt.

15. System nach einem der Ansprüche 10 bis 14, wobei die erste elektronische Vorrichtung als mobile Host-Vorrichtung und die zweite elektronische Vorrichtung als mobile Gastvorrichtung implementiert ist.

## Revendications

1. Procédé de connexion d'application, comprenant de :
au moyen d'un premier dispositif électronique, recevoir des informations de session en balayant une image d'identification d'une première application affichée sur un dispositif d'affichage ;
au moyen du premier dispositif électronique, sélectionner un second dispositif électronique pour se connecter à la première application du dispositif d'affichage, parmi une pluralité de dispositifs électroniques ;
au moyen du premier dispositif électronique, transmettre un message d'invitation comprenant les informations de session reçues au second dispositif électronique sélectionné ; et
au moyen d'un second dispositif électronique, se connecter à la première application du dispositif d'affichage sur la base des informations de session qui sont comprises dans le message d'invitation transmis.

2. Procédé selon la revendication 1, dans lequel le message d'invitation comprend un ou plusieurs éléments parmi des informations d'identifiant de ressources uniformes, URI, et un localisateur de ressources uniformes, URL.

3. Procédé selon la revendication 2, dans lequel le second dispositif électronique se connecte à la première application du dispositif d'affichage sur la base des informations de session comprises dans le message d'invitation transmis.

4. Procédé selon l'une quelconque des revendications précédentes, dans lequel l'image d'identification comprend un code de réponse rapide, QR.

5. Procédé selon l'une quelconque des revendications précédentes, dans lequel le premier dispositif électronique est implémenté en tant que dispositif mobile hôte et le second dispositif électronique est implémenté en tant que dispositif mobile invité.

6. Procédé selon la revendication 5, dans lequel le dispositif mobile hôte utilise les informations de session pour générer du contenu afin de fournir le message d'invitation au dispositif mobile invité.

7. Procédé selon la revendication 5, dans lequel le dispositif mobile hôte fournit le message d'invitation au dispositif mobile invité par le biais de l'un d'un message texte et d'un courrier électronique.

8. Procédé selon la revendication 2, comprenant en outre :
la transmission d'un contenu d'identification et d'informations liées au premier dispositif électronique à un serveur ; et
la génération de manière automatique du message d'invitation comprenant les informations de session pour le second dispositif électronique afin d'obtenir l'accès au réseau.

9. Procédé selon la revendication 8, comprenant en outre :
le lancement d'une seconde application sur le second dispositif électronique ;
l'utilisation des informations de session pour récupérer des informations liées au premier dispositif électronique provenant du serveur par le second dispositif électronique ; et
l'utilisation des informations récupérées par le second dispositif électronique pour se connecter à la première application.

10. Système comprenant :
un premier dispositif électronique (140) conçu pour recevoir des informations de session en balayant une image d'identification d'une première application affichée sur un dispositif d'affichage (120), sélectionner un second dispositif électronique pour se connecter à la première application du dispositif d'affichage, parmi une pluralité de dispositifs électroniques ; et transmettre un message d'invitation comprenant les informations de session reçues au second dispositif électronique sélectionné ; et
un second dispositif électronique (140) conçu pour se connecter à la première application du dispositif d'affichage sur la base des informations de session qui sont comprises dans le message d'invitation transmis.

11. Système selon la revendication 10, dans lequel le message d'invitation comprend un ou plusieurs éléments parmi des informations d'identifiant de ressources uniformes, URI, et un localisateur de ressources uniformes, URL.

12. Système selon la revendication 11, dans lequel le second dispositif électronique se connecte à l'application du dispositif d'affichage sur la base des informations de session comprises dans le message d'invitation transmis.

13. Système selon l'une quelconque des revendications 10 à 12, dans lequel l'image d'identification comprend un code de réponse rapide, QR.

14. Système selon la revendication 11, dans lequel le premier dispositif électronique utilise les informations de session pour générer du contenu afin de fournir le message d'invitation au second dispositif électronique, et éventuellement, dans lequel le premier dispositif électronique fournit le message d'invitation au second dispositif électronique à travers l'un d'un message texte et d'un courrier électronique.

15. Système selon l'une quelconque des revendications 10 à 14, dans lequel le premier dispositif électronique est implémenté en tant que dispositif mobile hôte et le second dispositif électronique est implémenté en tant que dispositif mobile invité.
